Europäisches Patentamt

(19) European Patent Office

Office européen des brevets

(11) Publication number: **0 008 537**
**A1**

(12) # EUROPEAN PATENT APPLICATION

(21) Application number: **79301713.8**

(22) Date of filing: **21.08.79**

(51) Int. Cl.³: **A 01 K 1/12**
**A 01 J 5/00**

(30) Priority: **21.08.78 US 935348**

(43) Date of publication of application:
**05.03.80 Bulletin 80/5**

(84) Designated Contracting States:
**DE FR GB NL SE**

(71) Applicant: **Schwartau, Daniel J.**
**Route 4**
**Red Wing Minnesota 55066(US)**

(71) Applicant: **Schwartau, Merle C.**
**Route 4**
**Red Wing Minnesota 55066(US)**

(71) Applicant: **Schwartau, David R.**
**Route 4**
**Red Wing Minnesota 55066(US)**

(72) Inventor: **Schwartau, Merle C.**
**Route 4**
**Red Wing Minnesota 55066(US)**

(72) Inventor: **Schwartau, Daniel J.**
**Route 4**
**Red Wing Minnesota 55066(US)**

(72) Inventor: **Schwartau, David R.**
**Route 4**
**Red Wing Minnesota 55066(US)**

(74) Representative: **Arthur, George Fitzgerald et al,**
**KILBURN & STRODE 30, John Street**
**London WC1N 2DD(GB)**

(54) Apparatus for a dairy barn.

(57) This invention is dairy barn apparatus including a platform (11) with a number of milking stalls (21) and a floor (12) which can be raised and lowered adjacent the edge of the plaform (11), so that in the raised position a cow can enter the barn and move over the floor and into a stall on the platform (11). In the lowered position, the operator can enter a nook (14) in the edge of the platform where he can conveniently connect the milking apparatus which is in a flue (23) below the platform, but above ground level forward of the rear feet of the cow.

_Fig.3_

Croydon Printing Company Ltd

.1.

## APPARATUS FOR A DAIRY BARN

This invention relates to apparatus for use in a diary barn, and one object is to provide apparatus enabling animals to be milked conveniently, and with little danger of the milk being fouled by manure.

According to the present invention, dairy barn apparatus comprises a platform for animals to stand on while being milked, a floor adjacent the platform, and means arranged to raise and lower the floor between a raised position in which animals can move between the floor and the platform, and a lowered position in which the operator is able to milk animals on the platform while he is standing on a surface lower than that of the platform.

With the floor in the raised position, it can be arranged that cows can come straight in from outside, and onto the platform where there can be stalls for restraining the cows when milking.

A single raisable floor, possibly between the facing edges of two spaced platforms, or possibly two raisable floors at the outer edges of a central platform means that the raising apparatus can be reasonably straight forward, and a large number of cows, one in each stall along the platform or platforms can be milked with a single raising and lowering operation of the floor.

The animals are confined in their respective stalls during milking, and after milking can go straight outside the barn by way of the raised floor, so that there is little contamination by manure. Manure gratings along the edges of the floor can be arranged to collect manure dropped during milking, and that manure can be then collected in a manure gutter in a lower support surface, possibly below ground level.

During milking the operator can stand on the lowered floor, or on a ground level floor of a nook in the edge of the platform, so that when the cows are safely in their stalls, and the floor is lowered, the operator is in the most convenient position for milking without having to stoop beneath the cows. A milk line and/or a vacuum line for use during milking can be housed in a flue extending underneath the platform, preferably forwardly of the cow's hind feet, so that it will not be contaminated and preferably above ground level so that gravity assists the milking action. The operator can attach a teat cup from those lines to the cow's teats, from the lowered position in the nooks with ease.

The apparatus is such that it is not usable only for milking, but can be used throughout the year for other purposes, for example for mangering cows during the winter.

Peel's U.S. Patent Specification No. 4006712 discloses milking apparatus in which a cow is supported during milking on a vertically movable platform. That enables the operator to be at a level below that of the cow, which simplifies his activities, but the apparatus cannot be used as a barn in which a number of cows can be milked, and each vertically movable platform has to have its own set of lifting equipment, and there are no means for conveniently positioning the milk and vacuum lines.

The arrangement of the present invention enabling the cows to move off the lifted floor into the stalls on the platforms which can be permanently fixed in the barn overcomes those disadvantages because the cows are milked while on a permanent platform under which the milking and vacuum lines are positioned, and the platform can then be lowered to let the operator get into the nooks for the milking operation.

The invention may be carried into practice in various ways, and one embodiment will be described by way of example with reference to the accompanying drawings; of which

FIGURE 1 is a plan view of milking apparatus;

FIGURE 2a is a side view of the same apparatus with the floor in its raised position;

FIGURE 2b is a side view of the same apparatus with the floor in its lowered position;

FIGURE 3 is a sectional elevation taken along line 3-3 of FIGURE 2b with the floor in its lowered position; and

FIGURE 4 is a sectional elevation taken along line 3-3 of FIGURE 2a with the floor in its raised position.

The apparatus 10 comprises two fixed concrete platforms 11 that extend along both sides of the barn and a centre alley 12 constituted by a steel floor that can be raised from a support surface 15. Recessed in the platforms 11 along the longitudinal edges 13 of the centre alley 12 are milking nooks 14. The milking nooks 14, when not in use, are covered by removable nook covers 20.

During milking, the animals stand on the fixed platforms 11.

The animals are restrained from moving during milking by stalls 21 and neck chains (not shown); a row of stalls 21 is arranged on each of the platforms 11. Each side of a stall 21 has a hinged portion 22 that can be swung to either side and locked in position behind the animal that is to be milked.

Located beneath the surface of the platforms 11 but above the level of the support surface 15 are flues 23, each of which contains a stainless steel milk line 24 and a vacuum line 30. Ports (not shown) for the attachment of milking equipment (not shown) to the lines 24 and 30 exist for each nook 14. The milking equipment consists of a vacuum line extension and a teat cup assembly and line. During milking, the vacuum line extension is connected to the vacuum line port to apply suction to the teat cup. Milk from the cow flows into the milk line 24 by gravity and suction, the suction being supplied by the same suction pump as supplies the vacuum line 30.

Typically, the vacuum pressure required is 12.5-13 inches of mercury. Because the milk line 24 is disposed beneath the cow and yet above ground, the vacuum pressure required to cause the milk to flow through the milk line 24 to ground level storage tanks is less than in traddition arrangements employing an elevated milk line and ground level stalls. The flue 23 is disposed forwardly of the hind legs of the cow during milking so that the lines 24 and 30 and the milking equipment are not contaminated by manure. While the flue 23 is removed from the point of accumulation of manure, it is not so far forward that the operator cannot attach the milking equipment to the flue ports and milk the cow from within the nook 14.

A gutter grate 31 runs the length of each of the longitudinal edges 13 of the centre alley 12. Positioned directly beneath the gutter grates 31 are manure gutters 32, which collect the manure falling through the gutter grates 31. Depending from the inward side of the gutter grates 31 are deflectors 33, which ensure that manure falling through the grates 31 falls into the gutters 32.

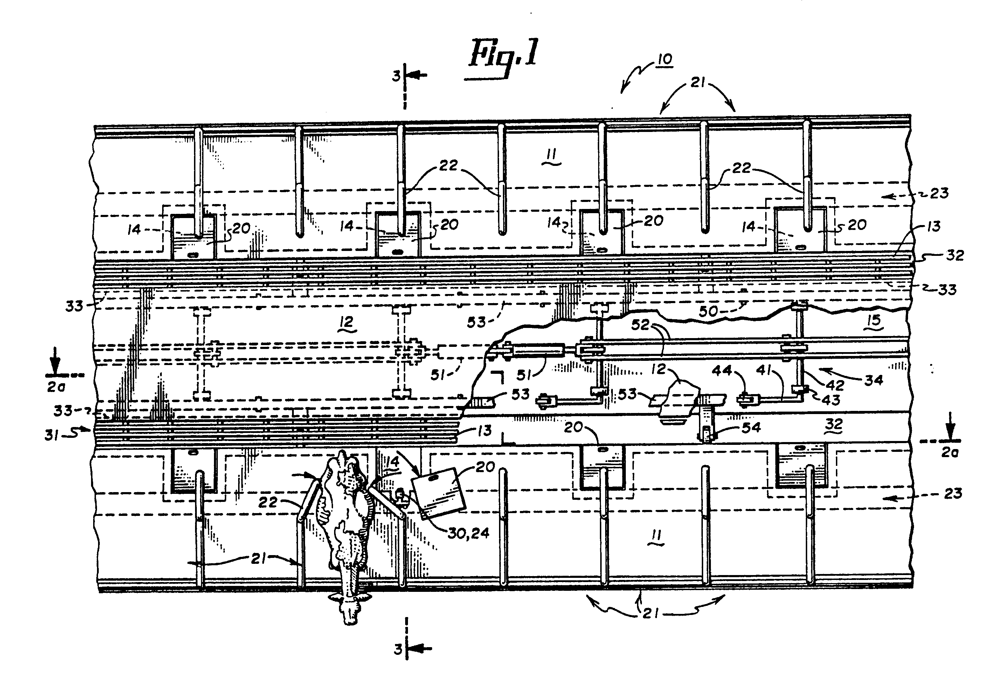

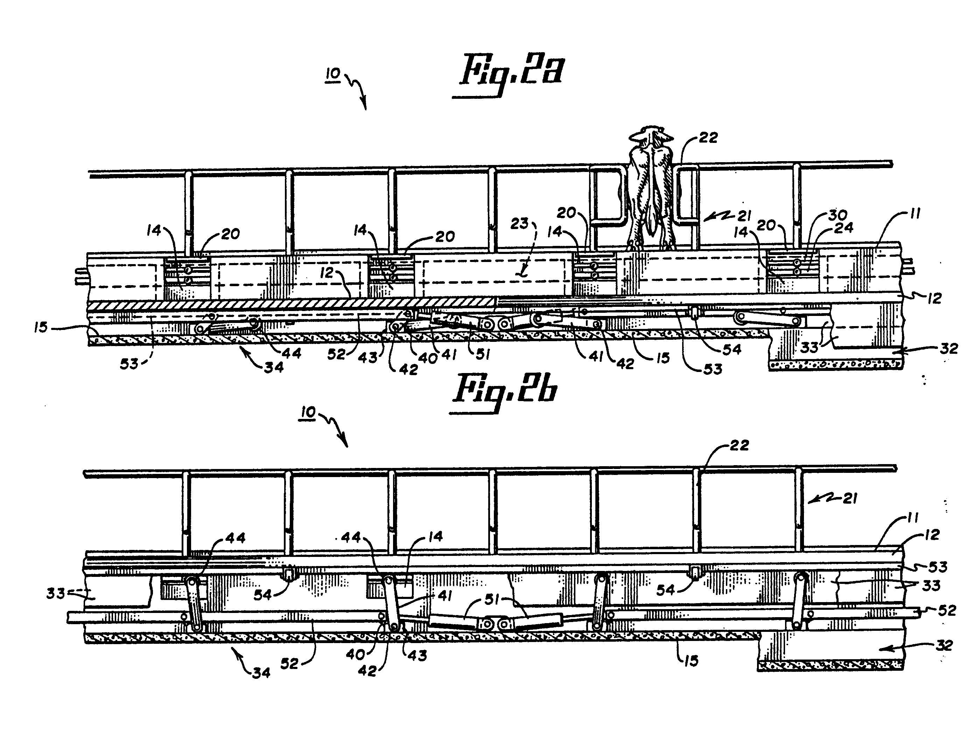

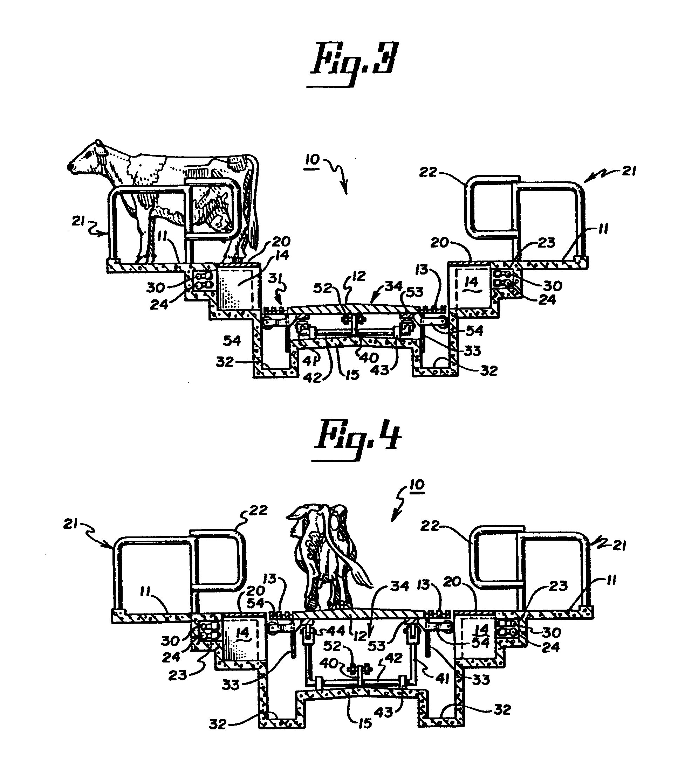

The centre alley 12 can be raised and lowered between the positions shown in FIGURES 2a and 2b. When the centre alley 13 is in its raised position, level with the platform 11, the animals are able to approach or leave the platforms 11 by the centre alley 12. In its lowered position, the alley 12 is lower than the platform 11, and the operator can milk the animals while he is standing upright on the centre alley 12.

The floor of the centre alley is moved by lift assemblies 34, each consisting of a centre lift arm 40 centered beneath the alley 12 and welded to a shaft 42, which extends outwardly from the centre lift arm 40 in both directions, being held in the lift arm shaft bearings 43 mounted on the support surface 15. The outer ends of the shaft 42 are welded to outer lift arms 41 so that the combination constitutes a bell crank. Mounted on the outer ends of each of the outer lift arms 41 are lift arm rollers 44. Affixed to the bottom of the centre alley 12 and in the same plane as the plane of rotation of the outer lift arm 41 are lift arm stops 50.

Two oppositely-facing longitudinally-extending hydraulic rams 51 are pivotally mounted at the centre of the support surface 15 beneath the floor of the alley 12. The rams 51 are driven together by operation of a hydraulic control valve (not shown) that is connected to an air reservoir (not shown), and provides pressure to an oil system (not shown). Each ram 51 is pivotally connected to one of a pair of lift arm power linkages 52; one of which extends forwardly from its ram 51 while the other extends rearwardly.

The linkages 52 are pivotally connected respectively to the forwardly and rearwardly disposed centre lift arms 40, so that an extension of the rams 51 causes a longitudinal displacement of the power linkages 52, which in turn rotates the outer lift arms 41 in an upward direction, raising the alley floor 12. Tracks 53 extend the length of the bottom surface of the edges of the alley 12 and provide surfaces on which the lift arm rollers 44 move as the alley floor 12 is raised or lowered. The alley floor 12 also is guided by laterally disposed guide rollers 54.

In operation, animals are moved across the raised centre alley 12 onto the fixed platform 11 and into individual stalls 21, and then the alley floor is lowered by releasing the hydraulic rams 51.

The operator moves from the lowered centre alley 12 into the milking nooks 14. As he moves into a nook 14, he removes the nook cover 20, swings the hinged partitions 22 behind the cow, attaches the milking equipment to the cow, moves out of the nook 14 and replaces the nook cover 20. The operator normally proceeds down one row of stalls and up the other row using the same procedure. When milking has been completed, the milking equipment is removed and the floor alley 12 is again raised and the cattle are herded out of the stalls 21 across the centre alley 12 and out of the dairy barn.

Of course, various modifications could be made to the structure of the preferred embodiment. For example, the dairy barn could be constructed with two adjacent rows of central stalls and a side alley at each side. The side alleys could be elevated as already described or could be hinged to the barn walls and raised with a hoist system. Centre or side alleys could be raised and lowered with a chain or cable hoist, or a pneumatic or hydraulic system.

0008537

.9.

CLAIMS

1.    Dairy barn apparatus comprising a platform
for animals to stand on while being milked, a floor
adjacent the platform, and means arranged to raise
and lower the floor between a raised position in
which animals can move between the floor and the
platform, and a lowered position in which the
operator is able to milk animals on the platform
while he is standing on a surface lower than that
of the platform.

2.    Apparatus as claimed in Claim 1 in which
the platform is provided with a number of stalls
for restraining the animals during milking.

3.    Apparatus as claimed in Claim 2 in which
the stalls are arranged in no more than two
adjacent rows.

4.    Apparatus as claimed in Claim 2 or Claim 3
in which each stall has a hinged part for keeping
an animal in.

5.    Apparatus as claimed in any of the
preceding claims including milking nooks constituted
by recesses in the platform edge adjacent the floor.

6.     Apparatus as claimed in Claim 5 in which there is a nook between two adjacent stalls.

7.     Apparatus as claimed in Claim 5 or Claim 6 including removable covers over the nooks.

8.     Apparatus as claimed in any of the preceding claims in which there is a central floor between two platforms, one adjacent each side of the floor.

9.     Apparatus as claimed in any of the preceding claims, in which the floor contains a gutter grate along its edge adjacent the platform.

10.     Apparatus as claimed in Claim 9 including a manure gutter in or below a support surface below the floor, the gutter being below the gutter grate.

11.     Apparatus as claimed in Claim 10, including deflectors disposed to direct manure falling through the gutter grate into the gutter.

12.     Apparatus as claimed in any of the preceding claims in which the raising means comprises a plurality of lift assemblies, each of which comprises a central lift arm, two outer lift arms, a shaft to which the central and outer lift arms are welded at a fixed angle with respect to each other, lift arm shaft bearings mounted on the support surface, and in which the shaft is mounted, lift arm rollers rotatably attached to the free ends of the outer lift arms, and lift arm stops affixed to the bottom of the floor; and also includes a hydraulic ram pivotally mounted at its base to the support surface, and a lift arm power linkage pivotally connected to the central lift arm of each assembly that is located to one side of the lift arm power linkage, one end of the lift arm power linkage being pivotally connected to the hydraulic ram for raising the floor to an upper position limited by the lift arm stops.

13. Apparatus as claimed in Claim 12 including tracks secured to the bottom edges of the floor to guide the lift arm rollers, and laterally disposed guide rollers extending from the bottom of the floor

14. Apparatus as claimed in any of the preceding claims, including a milk line and/or vacuum line flue disposed beneath the platform.

15. Apparatus as claimed in Claim 14 in which the flue is above ground level.

16. Apparatus as claimed in Claim 14 or Claim 15 in which the flue is positioned in front of where the animals' hind legs will be during milking.

<div align="right">
KILBURN & STRODE<br>
Chartered Patent Agents,<br>
Agents for the Applicants.
</div>

*Fig.1*

_Fig.2a_

_Fig.2b_

2/3

0008537

*Fig.3*

*Fig.4*

## EUROPEAN SEARCH REPORT

European Patent Office

**Application number**

EP 79 301 713.8

| DOCUMENTS CONSIDERED TO·BE RELEVANT | | | CLASSIFICATION OF THE APPLICATION (Int. Cl.) |
|---|---|---|---|
| Category | Citation of document with indication, where appropriate, of relevant passages | Relevant to claim | |
| D | US - A - 4 006 712 (J.F. PEEL) <br> * fig. 1 to 3 * | 1,2 | A 01 K 1/12 <br> A 01 J 5/00 |
| | US - A - 2 689 546 (H. PETRI) <br> * fig. 1 * | 5,6 | |
| A | US - A - 3 877 419 (K. RODGER) <br> * fig. 1, 2 * | 1,2 | |
| A | DD - A - 75 869 (M. TESCH et al.) <br> * fig. 1, 2 * | 1-3 | |
| A | DE - B1 - 2 646 242 (M. POLLOZEK) <br> * fig. 1, 2 * | 1,2 | A 01 J 5/00 <br> A 01 K 1/12 |

**TECHNICAL FIELDS SEARCHED (Int.Cl.)**

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 16-11-1979 | SCHOFER |

EPO Form 1503.1 06.78